(19) Europäisches Patentamt
European Patent Office
Office européen des brevets

(11) Veröffentlichungsnummer: **0 415 110 A1**

# (12) EUROPÄISCHE PATENTANMELDUNG

(21) Anmeldenummer: **90114736.3**

(22) Anmeldetag: **01.08.90**

(51) Int. Cl.5: **F16H 19/00**, G05G 7/02, B60H 1/00, E05F 11/42

(30) Priorität: **29.08.89 DE 3928496**

(43) Veröffentlichungstag der Anmeldung: **06.03.91 Patentblatt 91/10**

(84) Benannte Vertragsstaaten: **DE ES FR GB IT SE**

(71) Anmelder: **MAX KAMMERER GMBH**
**Hohemarkstrasse 22**
**W-6370 Oberursel/Taunus(DE)**

(72) Erfinder: **Schiller, Werner, Dipl.-Ing.**
**Im Heppensee 30**
**W-6106 Erzhausen(DE)**

(74) Vertreter: **Eyer, Eckhardt Philipp, Dipl.-Ing. et al**
**Patentanwälte Eyer & Linser**
**Robert-Bosch-Strasse 12a**
**W-6072 Dreieich(DE)**

## (54) Drehbetätigtes Stellglied für linear betätigte Regelglieder.

(57) Drehbetätigtes Stellglied für linear betätigte Regelglieder, insbesondere handkurbelbetätigtes Stellglied für Fensterheber, drehknopfbetätigter Sollwerteinsteller für Heizungs- oder Klimaregler von Kraftfahrzeugen, bestehend aus einem Drehelement (4), einem mit dem Drehelement verbundenen Zahnritzel (1) als Antrieb für eine mit ihm in Eingriff stehende Zahnstange (2), die unmittelbar oder beispielsweise über einen Bowdenzug (3) mittelbar mit dem Regelglied verbunden ist, bei dem an der Zahnstange (2) ein in den Stellweg des Zahnritzels (1) einragender Kupplungszapfen (7) angeordnet und das Zahnritzel (1) mit einer Kulisse (5) versehen ist, wobei die Stellung des Kupplungszapfens (7) und des Zahnritzels (1) zur Verzahnung der Zahnstange derart aufeinander abgestimmt sind, daß der Kupplungszapfen (7) bei Annäherung des Stellgliedes an seine Endstellung der maximalen Aussteuerung bei gleichzeitigem Ausrücken des Zahnritzels (1) aus ihrer Verzahnung mit der Zahnstange (4) in die Kulisse (5) eingreift, so daß die weitere Verstellung des Stellgliedes bis zur Erreichung der Endstellung im Zusammenwirken zwischen dem Kupplungszapfen (7) und der Kulisse (5) bis zum Anschlag des Kupplungszapfens (7) im Grund der Kulisse (5) bewirkt wird.

6
3
2
5
7
1
4
Dreh-
richtung
Ritzel

FIG. 1



Xerox Copy Centre

Die Erfindung geht aus von einem drehbetätigten Stellglied für linear betätigte Regelglieder gemäß dem Oberbegriff des Patentanspruches 1.

Die Betätigung von Regelgliedern in Kraftfahrzeugen erfolgt aus Platzgründen bevorzugt mit Hilfe von Drehelementen, so daß häufig die Umsetzung der am Drehknopf eingeleiteten Stellkraft in eine lineare Bewegung erforderlich wird. Hierbei wird neben einer streng linearen Übersetzungskennlinie die Forderung gestellt, die insbesondere in der Stellung der maximalen Aussteuerung von dem Regelglied ausgehenden Rückstellkräfte zu kompensieren, d.h. eine selbsttätige Rückstellung des Regelgliedes unter damit ebenfalls Rückstellung des Stellgliedes auszuschließen.

Der vorliegenden Erfindung liegt als Aufgabe die Schaffung eines drehbetätigten Stellgliedes zugrunde, mit dessen Hilfe eine Rückstellung des Regelgliedes in der maximalen Aussteuerungs-Stellung unter Rückwirkung auf das Stellglied zuverlässig vermieden ist.

Diese Aufgabe wird mit Stellglied mit den im Patentanspruch 1 wiedergegebenen Merkmalen gelöst.

Durch die Entkoppelung der Verzahnung und Übernahme der weiteren Verstellung des Stellgliedes bis zu seiner Endstellung von einer eine Endraste aufweisenden Kulisse ist sichergestellt, daß die von dem Regelglied ausgehenden Rückstellkräfte aufgenommen und eine Weiterleitung an des Stellglied ausgeschlossen ist. Hierbei ist darüberhinaus auf dem gesamten Stellweg eine absolute Linearität der Wegeübersetzung gewährleistet.

Weitere Ausführungsformen und Vorteile der Erfindung ergeben sich aus der nachfolgenden Beschreibung, in der die Erfindung anhand der beiliegenden Zeichnung beispielsweise erläutert ist. Es zeigen

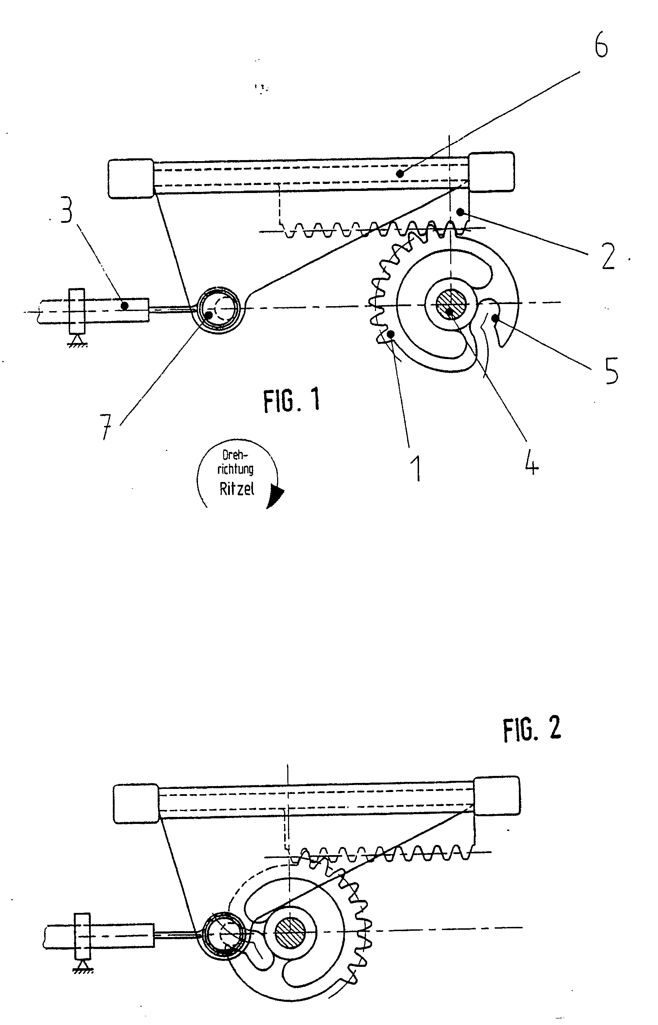

Fig. 1 die Ansicht eines drehbetätigten Stellgliedes in seiner
Endstellung am Beginn des Stellweges

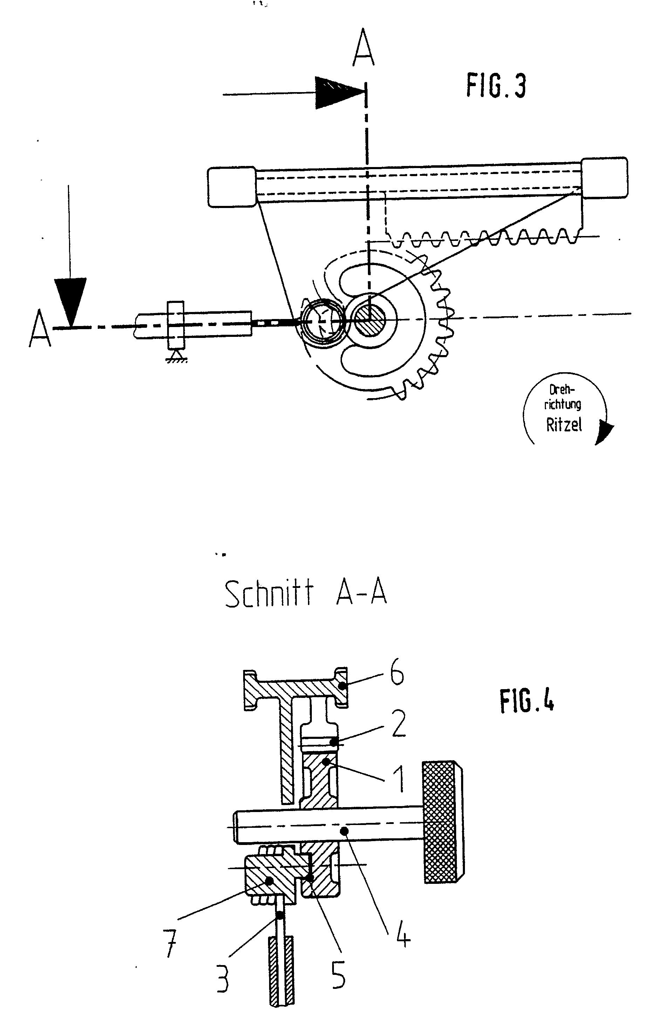

Fig. 2 die Ansicht des in Fig. 1 wiedergegebenen Stellgliedes bei Eintritt des Kupplungszapfens in die Kulisse

Fig. 3 die Ansicht des in Fig. 1 wiedergegebenen Stellgliedes in seiner Endstellung maximaler Aussteuerung

Fig. 4 einen Schnitt nach A - A durch Fig. 3

Fig. 5 eine Ausführungsform einer Weiterbildung des in den Fig. 1 bis 4 wiedergegebenen Reglers mit Betätigungsschieber

Fig. 6 eine andere Ausführungsform einer Weiterbildung des in den Fig. 1 bis 4 wiedergegebenen Reglers mit Betätigungsschieber

Das in den Fig. ,1 bis 4 wiedergegebene, beispielsweise zur Verwendung als Sollwerteinsteller für Heizungs- oder Klimaregler von Kraftfahrzeugen bestimmte drehbetätigte Stellglied für linear betätigte Regelglieder, beispielsweise einen Fensterheber, einen Klimaregler oder dergl. im Kraftfahrzeug eingesetzten Regelglieder, besteht aus dem Drehelement 4, einem mit dem Drehelement verbundenen Zahnritzel 1 als Antrieb für eine mit ihm in Eingriff stehende Zahnstange 2, die im Beispielsfall mittels eines Bowdenzuges 3 mit dem - nicht dargestellten - Regelglied verbunden ist. An einem an der Zahnstange 2 angeordneten Träger 8 ist - mit geringem Abstand hinter deren Verzahnung - ein in den Stellweg des Zahnritzels 1 einragender Kupplungszapfen 7 angeordnet, wobei die Stellung des Kupplungszapfens 7 und des Zahnritzels 1 im Verhältnis zur Verzahnung der Zahnstange 2 derart aufeinander abgestimmt sind, daß der Kupplungszapfen 7 bei Annäherung des Stellgliedes an seine End stellung der maximalen Aussteuerung bei gleichzeitigem Ausrücken des Zahnritzels 1 aus ihrer Verzahnung mit der Zahnstange 2 in die Kulisse 5 eingreift, so daß die weitere Verstellung des Stellgliedes bis zur Erreichung der Endstellung im Zusammenwirken zwischen dem Kupplungszapfen 7 und der Kulisse 5 bis zum Anschlag des Kupplungszapfens 7 im Grund der Kulisse 5 bewirkt wird. Die Kulisse von einem sich schräg entgegen der Drehrichtung des Zahnritzels 1 erstreckenden Führungsschlitz 5 gebildet, der in einen konzentrisch zur Drehachse verlaufenden Zweig 5b übergeht.

In der in der Zeichnung wiedergegebenen Ausführungsform des drehbetätigten Stellgliedes ist das Zahnritzel als Segmentenritzel ausgebildet, wobei die Kulisse 5 in dem zahnfreien Segment des Ritzels endet, es kann jedoch auch an dem Zahnritzel achsgleich eine die Kulisse enthaltende Scheibe mit einem dem linearen Stellweg der Zahnstange entsprechenden Umfang vorgesehen ist, wodurch auf einfache Weise eine Veränderung des Stellweges ohne Eingriff in das Übersetzungsverhältnis der Verzahnung vorgenommen werden kann.

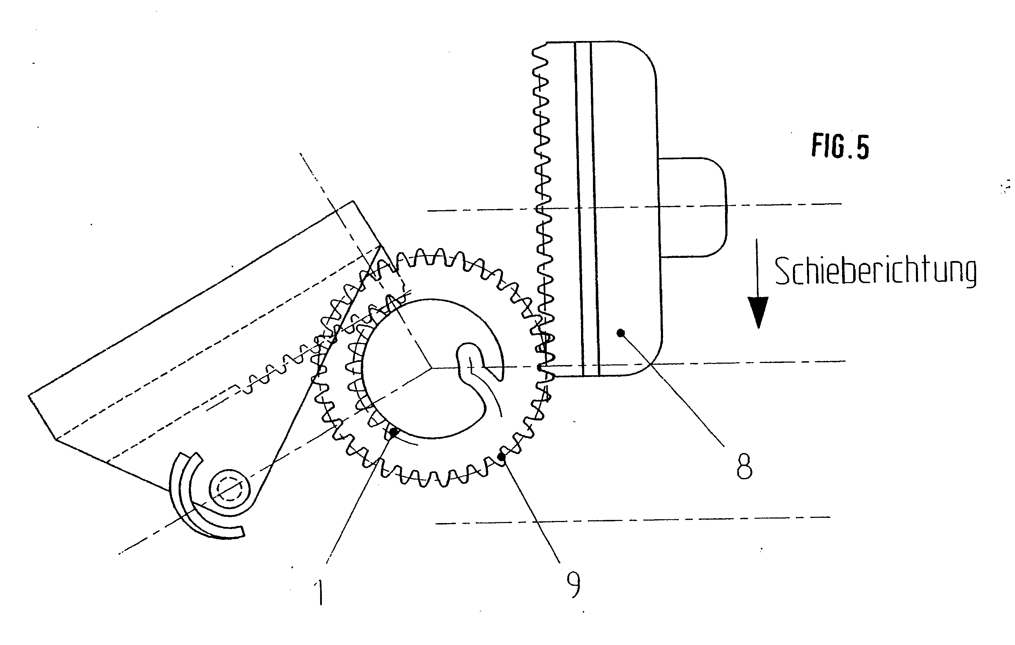

In einer Weiterbildung des drehbetätigten Stellgliedes kann - siehe Fig. 5 - an dem Zahnritzel 1 ein weiteres Zahnrad 11 angeordnet sein, das mit einem mit einer Verzahnung 12 versehenen Stellschieber 13 in Eingriff steht. Es ist auf diese Weise ohne sonstige Veränderung die Umwandlung des drehbetätigten Stellgliedes in einen Schiebregler möglich, wobei die Scheibe - etwa zur Verlängerung des linearen Stellweges - ebenfalls als Zahnrad ausgebildet sein kann, das mit einem mit einer Verzahnung 12 versehenen Stellschieber 13 in Eingriff steht.

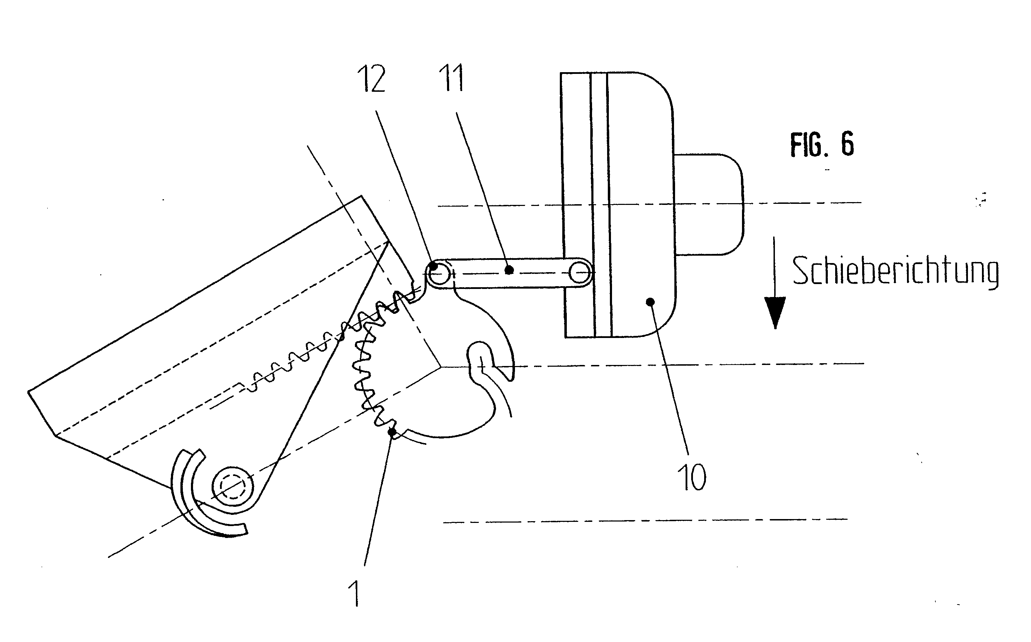

Eine Wandlung des drehbetätigten Reglers in einen Schieberegler kann auch mit der in Fig. 6 wiedergegebenen Ausführungsform erreicht werden, bei das Zahnritzel 7 mittels eines Lenkers 14 mit einem Stellschieber 15 verbunden ist.

## Ansprüche

1. Drehbetätigtes Stellglied für linear betätigte Regelglieder, insbesondere handkurbelbetätigtes Stellglied für Fensterheber, drehknopfbetätigter Sollwerteinsteller für Heizungs- oder Klimaregler von Kraftfahrzeugen, bestehend aus einem Drehelement (4), einem mit dem Drehelement verbundenen Zahnritzel (1) als Antrieb für eine mit ihm in Eingriff stehende Zahnstange (2), die unmittelbar oder beispielsweise über einen Bowdenzug (3) mittelbar mit dem Regelglied verbunden ist, dadurch gekennzeichnet, daß an der Zahnstange (2) ein in den Stellweg des Zahnritzels (1) einragender Kupplungszapfen (7) angeordnet und das Zahnritzel (1) mit einer Kulisse (5) versehen ist, wobei die Stellung des Kupplungszapfens (7) und des Zahnritzels (1) zur Verzahnung der Zahnstange derart aufeinander abgestimmt sind, daß der Kupplungszapfen (7) bei Annäherung des Stellgliedes an seine Endstellung der maximalen Aussteuerung bei gleichzeitigem Ausrücken des Zahnritzels (1) aus ihrer Verzahnung mit der Zahnstange (4) in die Kulisse (5) eingreift, so daß die weitere Verstellung des Stellgliedes bis zur Erreichung der Endstellung im Zusammenwirken zwischen dem Kupplungszapfen (7) und der Kulisse (5) bis zum Anschlag des Kupplungszapfens (7) im Grund der Kulisse (5) bewirkt wird.

2. Drehbetätigtes Stellglied für linear betätigte Regelglieder nach Anspruch 1, dadurch gekennzeichnet, daß die Kulisse von einem sich schräg entgegen der Drehrichtung des Zahnritzels (1) erstrekkenden, in einen konzentrisch zur Drehachse verlaufenden Zweig (5b) übergehenden Führungsschlitz gebildet ist.

3. Drehbetätigtes Stellglied für linear betätigte Regelglieder nach Anspruch 2, dadurch gekennzeichnet, daß das Zahnritzel als Segmentenritzel ausgebildet und der die Kulisse bildende Schlitz in dem zahnfreien Segment des Ritzels endet.

4. Drehbetätigtes Stellglied für linear betätigte Regelglieder nach Anspruch 2, dadurch gekennzeichnet, daß an dem Zahnritzel achsgleich eine die Kulisse enthaltende Scheibe mit einem dem linearen Stellweg der Zahnstange entsprechenden Umfang vorgesehen ist.

5. Drehbetätigtes Stellglied für linear betätigte Regelglieder nach Anspruch 2 oder 3, dadurch gekennzeichnet, daß an dem Zahnritzel (1) ein weiteres Zahnrad (11) angeordnet und das Zahnrad (11) mit einem mit einer Verzahnung (12) versehenen Stellschieber (13) in Eingriff steht.

6. Drehbetätigtes Stellglied für linear betätigte Regelglieder nach Anspruch 4, dadurch gekennzeichnet, daß die Scheibe als Zahnrad ausgebildet ist, das mit einem mit einer Verzahnung (12) versehenen Stellschieber (13) in Eingriff steht.

7. Drehbetätigtes Stellglied für linear betätigte Regelglieder nach Anspruch 1 oder 2, dadurch gekennzeichnet, daß das Zahnritzel mittels eines Lenkers (14) mit einem Stellschieber (15) verbunden ist.

6
3
2
5
7
1
4
FIG. 1
Dreh-
richtung
Ritzel

FIG. 2

A
FIG.3
A
Dreh-
richtung
Ritzel

Schnitt A-A

6
FIG.4
2
1
7
4
3
5

Schieberichtung
8
9
1

FIG.5

FIG. 6
Schieberichtung
10
11
12
1

Europäisches Patentamt

# EUROPÄISCHER RECHERCHENBERICHT

Nummer der Anmeldung

**EP 90 11 4736**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 178 455 (SIEMENS)<br>* Zusammenfassung; Figur 1 * | 1 | F 16 H 19/00<br>G 05 G 7/02<br>B 60 H 1/00<br>E 05 F 11/42 |
| A | GB-A-7 308 24 (STUART DAVIS LTD)<br>* Seite 1, Zeile 62 - Seite 2, Zeile 3; Figur 1 * | 1-2,4 | |
| A | DE-U-8 126 754 (SÜDDEUTSCHE KÜHLERFABRIK)<br>* Seite 7, Absatz 2 - Seite 8, Absatz 1; Figur 1 * | 1-3 | |
| A | FR-A-2 335 753 (BMW)<br>* Seite 2, Zeile 36 - Seite 3, Zeile 26; Figur 1 * | 1 | |

RECHERCHIERTE SACHGEBIETE (Int. Cl.5)

F 16 H
G 05 G
B 60 H
E 05 F

Der vorliegende Recherchenbericht wurde für alle Patentansprüche erstellt

| Recherchenort | Abschlußdatum der Recherche | Prüfer |
|---|---|---|
| Den Haag | 29 November 90 | FLODSTROEM J.B. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument